# EUROPÄISCHE PATENTANMELDUNG

(11) **EP 1 322 129 A1**
(43) Veröffentlichungstag der Anmeldung: **25.06.2003**
(21) Anmeldenummer: 01130733.7
(22) Anmeldetag: 21.12.2001
(51) Int. Cl.: H04Q 7/38

(54) **Verfahren zum netzwerkseitigen Erkennen spezifischer Fähigkeiten von Teilnehmerstationen in einem Kommunikationssystem**

(71) Anmelder: SIEMENS AKTIENGESELLSCHAFT, 80333 München (DE)
(72) Erfinder: Schniedenharn, Joerg, 13587 Berlin (DE)

(57) **Zusammenfassung**

Die Erfindung betrifft ein Verfahren zum netzwerkseitigen Erkennen spezifischer Fähigkeiten mindestens einer Teilnehmerstation in einem Kommunikationssystem, insbesondere in einem Funk-Kommunikationssystem. Dabei umfasst das Kommunikationssystem Netzwerkeinrichtungen und die mindestens eine Teilnehmerstation, wobei die durch Parameter charakterisierten, spezifischen Fähigkeiten der mindestens einen Teilnehmerstation durch Parameterwerte bestimmt werden. Erfindungsgemäß werden Parameter zumindest teilweise zu mindestens einer Parameterklasse zusammengefasst,
wobei verschiedenen Kombinationen von Parameterwerten zu unterschiedlichen Parametern innerhalb der mindestens einen Parameterklasse jeweils ein Klassenwert zugeordnet ist, und es werden sowohl der Klassenwert der mindestens einen Parameterklasse als auch mindestens ein Parameterwert zu mindestens einer Netzwerkeinrichtung des Kommunikationssystems signalisiert. Die Erfindung dient der Veringerung des Signalisierungsaufwands und gewährleistet dennoch eine hohe Flexibilität hinsichtlich Fähigkeiten der Teilnehmerstation.

## Beschreibung

Die Erfindung betrifft ein Verfahren zum netzwerkseitigen Erkennen spezifischer Fähigkeiten mindestens einer Teilnehmerstation in einem Kommunikationssystem, insbesondere in einem Funk-Kommunikationssystem, nach dem Oberbegriff des Anspruchs 1.

Die Erfindung betrifft außerdem ein Kommunikationssystem, insbesondere ein Funk-Kommunikationssystem nach dem Oberbegriff des Anspruchs 8.

Kommunikationssysteme umfassen in der Regel Netzwerkeinrichtungen und mindestens eine Teilnehmerstation. Kommunikationssysteme nehmen insbesondere im wirtschaftlichen Bereich einen immer größeren Stellenwert ein. Gleichzeitig wachsen auch die Anforderungen an die Flexibilität. Es wird daher gewünscht, dass Kommunikationssysteme verschiedenartige Teilnehmerstationen unterstützen können. Die Verschiedenartigkeit der Teilnehmerstationen drückt sich dabei in spezifischen Fähigkeiten, die eine Teilnehmerstation bereitstellt und/oder unterstützt, aus. Die durch Parameter charakterisierten, spezifischen Fähigkeiten der Teilnehmerstation werden durch Parameterwerte bestimmt oder codiert.

Die Fähigkeiten der einzelnen Teilnehmerstationen sind für die Kommunikation im Kommunikationssystem von großer Bedeutung. Daher ist es notwendig, dass netzwerkseitig, d.h. in mindestens einer Netzeinrichtung des Kommunikationssystems, Parameterwerte der Teilnehmerstationen bekannt sind, damit die Kommunikation entsprechend den spezifischen Fähigkeiten einer Teilnehmerstation erfolgen kann. Insbesondere kann netzwerkseitig eine Anpassung der Kommunikation an die Fähigkeiten der Teilnehmerstation erfolgen.

In der Regel meldet die Teilnehmerstation ihre Fähigkeiten in Form von Parameterwerten an mindestens eine Netzwerkeinrichtung des Kommunikationssystems. Bedingt durch die hohe Komplexität heutiger Kommunikationssysteme sind die Fähigkeiten von Teilnehmerstationen meist durch eine Vielzahl von Parametern bestimmt.

Ein Beispiel für ein Kommunikationssystem mit besonders großer Komplexität stellt ein Funk-Kommunikationssystem dar. Hier existieren eine große Vielzahl von Parametern, welche mit den Fähigkeiten der Teilnehmerstationen, d.h. der Mobilstationen, korrespondieren. Beispiele hierfür sind etwa der verfügbare Speicherplatz, die unterstützte Datenrate und die Rechenleistung.

In Funk-Kommunikationssystemen werden Informationen (beispielsweise Sprache, Bildinformation oder andere Daten) mit Hilfe von elektromagnetischen Wellen über eine Funkschnittstelle zwischen einer Basisstation und einer Mobilstation übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit TD/CDMA-Übertragungsverfahren bzw. FD/CDMA-Übertragungsverfahren über die Funkschnittstelle, wie beispielsweise das UMTS (Universal Mobile Telecommunication System) oder andere Systeme der dritten Generation sind Frequenzen im Frequenzband von ca. 2000 MHz vorgesehen.

Im Zusammenhang mit Funk-Kommunikationssystemen der dritten Generation sind beispielsweise die mit "UE capabilities" (UE User Equipment) bezeichneten Fähigkeiten als Parameter und Parameterwerte für Mobilstationen eines Funk-Kommunikationssystemen der dritten Generation in der Spezifikation für den UMTS-Standard:
3GPP Technical Specification TS 25.306, Version 4.2.0 (2001-09)
"UE Radio Acess Capabilities" (Release 4)
beschrieben.

Aus Netzwerksicht ist es vorteilhaft, wenn nicht zu viele unterschiedliche Fähigkeiten von Teilnehmerstationen unterstützt werden müssen, da potenziell jede dieser Teilnehmerstationen individuell vom Netzwerk konfiguriert werden muss.

Auf der anderen Seite ist es aber wichtig, viele verschiedene Fähigkeiten von Teilnehmerstationen zuzulassen, damit die nutzerseitig bestehenden unterschiedlichen Anforderungen an die Fähigkeiten der Teilnehmerstationen im Kommunikationssystem unterstützt werden können. Im Einklang damit besteht auf Seiten der Hersteller von Teilnehmerstationen der Wunsch, die von ihnen hergestellten Teilnehmerstationen auf Grund ihrer besonderen Fähigkeiten von denen anderer Herstellern unterscheidbar zu machen.

Eine hohe Flexibilität im Hinblick auf die Verschiedenartigkeit von in einem Kommunikationssystem zugelassenen Teilnehmerstationen bedeutet eine hohe Zahl an das Netzwerk zu übertragenden Parameterwerten. Auf der anderen Seite schränkt eine vorgegebene geringe Wahlmöglichkeit an Parametern bzw. an Parameterwerten die Flexibilität ein.

Die Aufgabe der vorliegenden Erfindung ist es daher, ein Verfahren und ein Kommunikationssystem der eingangs genannten Art aufzuzeigen, welche einerseits ein hohes Maß an Flexibilität hinsichtlich der spezifischen Fähigkeiten der Teilnehmerstationen im Kommunikationssystem zulassen, welche aber andererseits gleichzeitig zu einer Verringerung des Signalisierungsaufwands zwischen Teilnehmerstation und dem Netzwerk ermöglichen.

Die Aufgabe wird für das Verfahren durch die Merkmale des Anspruchs 1 gelöst.

Die Aufgabe wird für Kommunikationssystem durch die Merkmale des Anspruchs 8 gelöst.

Vorteilhafte Ausgestaltung und Weiterbildungen sind Gegenstand der anhängigen Ansprüche.

Erfindungsgemäß werden Parameter zumindest teilweise zu mindestens einer Parameterklasse zusammengefasst, wobei verschiedenen Kombinationen von Parameterwerten zu unterschiedlichen Parametern innerhalb der mindestens einen Parameterklasse jeweils ein Klassenwert zugeordnet ist, und es werden sowohl der Klassenwert der mindestens einen Parameterklasse als auch mindestens ein Parameterwert zu mindestens einer Netzwerkeinrichtung des Kommunikationssystems signalisiert.

Die Erfindung basiert auf der Idee, zwei denkbare Ansätze zu kombinieren. In einem ersten Ansatz könnte die Zahl der zu übermittelnden Werte dadurch enorm reduziert werden, dass alle Parameterwerte ausschließlich codiert in Klassenwerten übertragen werden, so dass jeweils ein Klassenwert für eine Mehrzahl von innerhalb der Parameterklasse kombinierten Parameterwerten steht. Werden in einem Kommunikationssystem aber nur eine limitierte Anzahl von Parameterklassen zugelassen, so ist die Möglichkeit der Differenzierung im Hinblick auf die Fähigkeiten der Teilnehmerstationen nur beschränkt möglich. Ein anderer Ansatz bietet die größtmögliche Flexibilität im Hinblick auf die Fähigkeiten der Teilnehmerstationen, erfordert allerdings die Übertragung aller Parameterwerte einzeln an mindestens eine Netzwerkeinrichtung des Kommunikationssystems.

Der Vorteil eines Hybridverfahrens besteht darin, einerseits Flexibilität hinsichtlich der von dem Kommunikationssystem unterstützten Teilnehmerstationen zu gewährleisten, aber anderseits durch den teilweisen Zurückgriff auf Signalisierung von Klassenwerten von Parameterklassen den Signalisierungsaufwand signifikant zu reduzieren.

Insbesondere im Zusammenhang mit Funk-Kommunikationssystemen ist diese Reduzierung von großer Bedeutung, da die Funkschnittstelle die kritische Ressource darstellt, welche durch den reduzierten Siganlisierungsaufwand deutlich entlastet werden kann.

In Weiterbildung der Erfindung werden in der mindestens einen Parameterklasse Parameterwerte mit Mindestfähigkeiten im Hinblick auf die Parameter der mindestens einen Parameterklasse zusammengefasst. Dies bringt den Vorteil, dass mitunter Abweichungen zwischen einerseits einem oder mehreren der mittels des Parameterwertes an die Netzwerkeinrichtung signalisierten Parameterwerte der Parameterklasse und andererseits dem zu der tatsächlichen Fähigkeit der Teilnehmerstation korrespondierenden Parameterwert bzw. den zu den tatsächlichen Fähigkeiten der Teilnehmerstation korrespondierenden Parameterwerten Differenzen möglich sind. Dabei dürfen die Abweichungen aber lediglich in einer Steigerung der Fähigkeit liegen.

Es besteht im Rahmen der Erfindung die Möglichkeit, dass die mindestens eine Parameterklasse den Parameter des mindestens einen Parameterwertes umfasst. In diesem Fall ersetzt der einzeln signalisierte Parameterwert den zum selben Parameter korrespondierenden Wert, der in der Parameterklasse codiert ist.

Es ist aber auch möglich, dass der mindestens eine Parameter des mindestens einen Parameterwertes sich von den Parametern der mindestens einen Parameterklasse unterscheidet. In diesem Fall ergänzt der einzeln signalisierte Parameterwert die mit dem Klassenwert der Parameterklasse codierten Parmeterwerte.

Die vorgenannten Möglichkeiten können auch dahingehend kombiniert werden, dass Parameterwerte mindestens zweier Parameter signalisiert werden, wobei mindestens ein erster Parameter in den Parametern der mindestens einen Parameterklasse umfasst ist und sich mindestens ein zweiter Parameter von den Parametern der mindestens einen Parameterklasse unterscheidet.

In Weiterbildung der Erfindung erfolgt die Auswahl der zu der mindestens einen Parameterklasse zusammengefassten Parameter anhand ihrer Relevanz für die Kommunikation. Dies ermöglicht, geeignete Wichtungen für die Signalisierung der Parameterwerte vorzunehmen.

Der Signalisierungsaufwand kann zusätzlich dadurch verringert werden, dass Parameterwerte zu Parametern nicht signalisiert werden, für die alle Teilnehmerstationen des Kommunikationssystems einen identischen Parameterwert aufweisen.

Das erfindungsgemäße Kommunikationssystem, insbesondere ein Funk-Kommunikationssystem umfasst Netzwerkeinrichtungen, mindestens eine Teilnehmerstation, sowie Mittel zum netzwerkseitigen Erkennen von durch Parameter charakterisierten, spezifischen Fähigkeiten der mindestens einen Teilnehmerstation, welche durch Parameterwerte bestimmt sind. Weiterhin sind Mittel zum Signalisieren sowohl eines Klassenwertes mindestens einer Parameterklasse als auch mindestens eines Parameterwertes von der mindestens einen Teilnehmerstation zu mindestens einer Netzwerkeinrichtung des Kommunikationssystems vorhanden, wobei Parameter zumindest teilweise zu mindestens einer Parameterklasse zusammengefasst sind und wobei jeweils ein Klassenwert verschiedenen Kombinationen von Parameterwerten zu unterschiedlichen Parametern innerhalb der mindestens einen Parameterklasse zugeordnet ist.

Als Komponenten des erfindungsgemäßen Kommunikationssystems kommt im Rahmen der Erfindung vor allem der Netzwerkeinrichtung und der Teilnehmerstation des Kommunikationssystems, insbesondere des Funk-Kommunikationssystems, Bedeutung zu.

Erfindungsgemäße Netzwerkeinrichtungen weisen
- Mittel zum netzwerkseitigen Erkennen von durch Parameter charakterisierten, spezifischen Fähigkeiten einer mindestens einen Teilnehmerstation des Kommunikationssystems, welche durch Parameterwerte bestimmt sind, und
- Mittel zum Empfangen und Verarbeiten von Signalisierungsdaten, welche sowohl einen Klassenwert mindestens einer Parameterklasse als auch mindestens einen Parameterwert der mindestens einen Teilnehmerstation umfassen,
auf, wobei Parameter zumindest teilweise zu mindestens einer Parameterklasse zusammengefasst sind und wobei jeweils ein Klassenwert verschiedenen Kombinationen von Parameterwerten zu unterschiedlichen Parametern innerhalb der mindestens einen Parameterklasse zugeordnet ist.

Erfindungsgemäße Teilnehmerstationen weisen
- Mittel zum Senden von Signalisierungsdaten, welche Parameterwerte zu durch Parameter charakterisierten, spezifischen Fähigkeiten der Teilnehmerstation umfassen, zu mindestens einer Netzwerkeinrichtung des Kommunikationssystems, und
- Mittel zum Vorhalten und Senden von Signalisierungsdaten, welche sowohl einen Klassenwert mindestens einer Parameterklasse als auch mindestens einen Parameterwert der Teilnehmerstation umfassen, zur Netzwerkeinrichtung des Kommunikationssystems
auf, wobei Parameter zumindest teilweise zu mindestens einer Parameterklasse zusammengefasst sind und wobei jeweils ein Klassenwert verschiedenen Kombinationen von Parameterwerten zu unterschiedlichen Parametern innerhalb der mindestens einen Parameterklasse zugeordnet ist.

Die Erfindung wird im folgenden an Hand eines vereinfachenden Beispieles verdeutlicht.

In diesem Beispiel werden lediglich Parameter von Telnehmerstationen eines Funk-Kommunikationssystems betrachtet, nämlich die Datenrate und die Speicherkapazität. Im Funk-Kommunikationssystem gibt es bspw. die in der nachfolgenden Tabelle dargestellten Parameterklassen A, B und C.

| **Parameterklasse** | **Datenrate** | **Speicher** |
|---|---|---|
| A | 14,4 kbit/s | 10 kB |
| B | 64 kbit/s | 100 kB |
| C | 128 kbit/s | 200 kB |

Eine Mobilstation soll an zumindestens eine Netzwerkeinrichtung signalisieren können, dass es zum Beispiel die Fähigkeiten der Parameterklasse als Mindestfähigkeiten aufweist. Zusätzlich soll die Teilnehmerstation aber indizieren können, dass sie bspw. einen Speicher von 200 kB besitzt. In einem komplexen bspw. nach dem Funkstandard UMTS arbeitenden Funk-Kommunikationssystem können einerseits der Klassenwert der Parameterklasse B und zusätzlich ein Parameterwert für den Speicherplatz von 200 kB an die mindestens eine Netzwerkeinrichtung signalisiert werden.

## Patentansprüche

1. Verfahren zum netzwerkseitigen Erkennen spezifischer Fähigkeiten mindestens einer Teilnehmerstation in einem Kommunikationssystem, insbesondere in einem Funk-Kommunikationssystem,
wobei das Kommunikationssystem Netzwerkeinrichtungen und die mindestens eine Teilnehmerstation umfasst,
wobei die durch Parameter charakterisierten, spezifischen Fähigkeiten der mindestens einen Teilnehmerstation durch Parameterwerte bestimmt werden,
**dadurch gekennzeichnet,**
**dass** Parameter zumindest teilweise zu mindestens einer Parameterklasse zusammengefasst werden,
wobei verschiedenen Kombinationen von Parameterwerten zu unterschiedlichen Parametern innerhalb der mindestens einen Parameterklasse jeweils ein Klassenwert zugeordnet ist, und
**dass** sowohl der Klassenwert der mindestens einen Parameterklasse als auch mindestens ein Parameterwert zu mindestens einer Netzwerkeinrichtung des Kommunikationssystems signalisiert werden.

2. Verfahren nach Anspruch 1, **dadurch gekennzeichnet, dass** in der mindestens einen Parameterklasse Parameterwerte mit Mindestfähigkeiten im Hinblick auf die Parameter der mindestens einen Parameterklasse zusammengefasst werden.

3. Verfahren nach Anspruch 1 oder 2, **dadurch gekennzeichnet, dass** die mindestens eine Parameterklasse den Parameter des mindestens einen Parameterwertes umfasst.

4. Verfahren nach Anspruch 1 oder 2, **dadurch gekennzeichnet, dass** der mindestens eine Parameter des mindestens einen Parameterwertes sich von den Parametern der mindestens einen Parameterklasse unterscheidet.

5. Verfahren nach Anspruch 3 und 4, **dadurch gekennzeichnet, dass** Parameterwerte mindestens zweier Parameter signalisiert werden, wobei mindestens ein erster Parameter in den Parametern der mindestens einen Parameterklasse umfasst ist und sich mindestens ein zweiter Parameter von den Parametern der mindestens einen Parameterklasse unterscheidet.

6. Verfahren nach einem Ansprüche 1 bis 5, **dadurch gekennzeichnet, dass** die Auswahl der zu der mindestens einen Parameterklasse zusammengefassten Parameter anhand ihrer Relevanz für die Kommunikation erfolgt.

7. Verfahren nach einem Ansprüche 1 bis 6, **dadurch gekennzeichnet, dass** Parameterwerte zu Parametern nicht signalisiert werden, für die alle Teilnehmerstationen des Kommunikationssystems einen identischen Parameterwert aufweisen.

8. Kommunikationssystem, insbesondere Funk-Kommunikationssystem,
umfassend Netzwerkeinrichtungen, mindestens eine Teilnehmerstation, sowie Mittel zum netzwerkseitigen Erkennen von durch Parameter charakterisierten, spezifischen Fähigkeiten der mindestens einen Teilnehmerstation, welche durch Parameterwerte bestimmt sind,
**dadurch gekennzeichnet,**
**dass** Mittel zum Signalisieren sowohl eines Klassenwertes mindestens einer Parameterklasse als auch mindestens eines Parameterwertes von der mindestens einen Teilnehmerstation zu mindestens einer Netzwerkeinrichtung des Kommunikationssystems vorhanden sind,
wobei Parameter zumindest teilweise zu mindestens einer Parameterklasse zusammengefasst sind und wobei jeweils ein Klassenwert verschiedenen Kombinationen von Parameterwerten zu unterschiedlichen Parametern innerhalb der mindestens einen Parameterklasse zugeordnet ist.

9. Netzwerkeinrichtung eines Kommunikationssystems, insbesondere eines Funk-Kommunikationssystems, mit Mitteln zum netzwerkseitigen Erkennen von durch Parameter charakterisierten, spezifischen Fähigkeiten einer mindestens einen Teilnehmerstation des Kommunikationssystems, welche durch Parameterwerte bestimmt sind,
**dadurch gekennzeichnet,**
**dass** Mittel zum Empfangen und Verarbeiten von Signalisierungsdaten, welche sowohl einen Klassenwert mindestens einer Parameterklasse als auch mindestens einen Parameterwert der mindestens einen Teilnehmerstation umfassen,
wobei Parameter zumindest teilweise zu mindestens einer Parameterklasse zusammengefasst sind und wobei jeweils ein Klassenwert verschiedenen Kombinationen von Parameterwerten zu unterschiedlichen Parametern innerhalb der mindestens einen Parameterklasse zugeordnet ist.

10. Teilnehmerstation eines Kommunikationssystems, insbesondere eines Funk-Kommunikationssystems, mit Mitteln zum Senden von Signalisierungsdaten, welche Parameterwerte zu durch Parameter charakterisierten, spezifischen Fähigkeiten der Teilnehmerstation umfassen, zu mindestens einer Netzwerkeinrichtung des Kommunikationssystems,
**dadurch gekennzeichnet,**
**dass** Mittel zum Vorhalten und Senden von Signalisierungsdaten, welche sowohl einen Klassenwert mindestens einer Parameterklasse als auch mindestens einen Parameterwert der Teilnehmerstation umfassen, zur Netzwerkeinrichtung des Kommunikationssystems vorhanden sind,
wobei Parameter zumindest teilweise zu mindestens einer Parameterklasse zusammengefasst sind und wobei jeweils ein Klassenwert verschiedenen Kombinationen von Parameterwerten zu unterschiedlichen Parametern innerhalb der mindestens einen Parameterklasse zugeordnet ist.
